(19)

Europäisches
Patentamt
European
Patent Office
Office européen
des brevets

(11)  **EP 1 831 752 B1**

(12)  **EUROPEAN PATENT SPECIFICATION**

(45) Date of publication and mention
of the grant of the patent:
**23.11.2016  Bulletin 2016/47**

(21) Application number: **05845622.9**

(22) Date of filing: **23.12.2005**

(51) Int Cl.:
*G02F 1/133* (2006.01)   *G09G 3/34* (2006.01)

(86) International application number:
**PCT/CA2005/001975**

(87) International publication number:
**WO 2006/066418 (29.06.2006 Gazette 2006/26)**

(54) **FIELD SEQUENTIAL DISPLAY OF COLOR IMAGES**

TEILBILDSEQUENTIELLE ANZEIGE VON FARBBILDERN

AFFICHAGE A SEQUENCE DE CHAMP POUR IMAGES EN COULEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.12.2004  US 638122 P**

(43) Date of publication of application:
**12.09.2007  Bulletin 2007/37**

(73) Proprietor: **Dolby Laboratories Licensing Corporation**
**San Francisco, CA 94103-4813 (US)**

(72) Inventor: **SEETZEN, Helge**
**Vancouver**
**British Columbia V6K 1W5 (CA)**

(74) Representative: **Riccardi, Elisa et al**
**Porta, Checcacci & Associati S.p.A.**
**Via Trebbia, 20**
**20135 Milano (IT)**

(56) References cited:
**WO-A-94/06249         WO-A-03/077013**
**CA-A1- 2 354 018      CA-C- 1 331 060**
**US-A- 6 031 626       US-A- 6 091 849**
**US-A1- 2002 060 662   US-A1- 2004 201 561**
**US-A1- 2004 246 275**

EP 1 831 752 B1

**Description**

Technical Field

The invention relates to displays for color images. The invention has application to color displays generally including computer displays, televisions, digital video projectors and the like.

Background

A typical liquid crystal display (LCD) has a backlight and a screen made up of variable-transmissivity pixels in front of the backlight. The backlight illuminates a rear face of the LCD uniformly. A pixel can be made dark by reducing the transmissivity of the pixel. The pixel can be made to appear bright by increasing the transmissivity of the pixel so that light from the backlight can pass through. Images can be displayed on an LCD by applying suitable driving signals to the pixels to create a desired pattern of light and dark areas.

In a typical color LCD, each pixel is made up of individually controllable red, green and blue elements. Each of the elements includes a filter that passes light of the corresponding color. For example, the red element includes a red filter. When only the red element in a pixel is set to transmit light, the light passes through the red filter and the pixel appears red. The pixel can be made to have other colors by applying signals which cause combinations of different transmissivities of the red, green and blue elements.

Fluorescent lamps are typically used to backlight LCDs. PCT publication No. WO03077013A3 entitled HIGH DYNAMIC RANGE DISPLAY DEVICES discloses a high dynamic range display in which LEDs are used as a backlight.

US Patent Application Publication No. 2004/246275 A1, on which the preamble of the independent claims is based, discloses a display device and display method wherein grayscale levels of red, green and blue are detected in each sub-frame, and the intensity of incident light and the transmittance of a liquid crystal panel are adjusted based on the detected grayscale levels.

US Patent Application publication No. 2002/060662 A1 discloses a field sequential liquid crystal display device, comprising a liquid crystal panel, a backlight device under the liquid crystal panel for irradiating light to the liquid crystal panel and having three color light sources, and an image signal processor. The image signal processor controls a sequential lighting order and a combination of the three color light sources.

US Patent Application publication No. 2004/201561 A1 discloses an image display apparatus and method capable of visually improving a sense of contrast by adjusting contrast and a light source to have correlation.

PCT publication No. WO94/0629 A discloses a display having an illumination system which makes use of stroboscopic light sources or continuously lit light sources in combination with electro-optical shutter means.

There is a need for cost effective color displays. There is a particular need for such displays that provide high quality color images.

Summary of the Invention

This invention has a number of aspects. One aspect of the invention provides a method for displaying images at a viewing area according to claim 1.

Another aspect of the invention provides an apparatus for displaying images at a viewing area according to claim 12. Further advantageous features are recited in the dependent claims.

Further aspects of the invention and features of specific embodiments of the invention are described below.

Brief Description of the Drawings

In drawings which illustrate non-limiting embodiments of the invention,

Figure 1 is a schematic view of a display;
Figure 1A is a flow chart illustrating a fast field sequential display method lying outside the scope of the claimed invention, useful for understanding the invention;
Figure 1B is a flow chart illustrating a method for obtaining modulator and light source driving signals lying outside the scope of the claimed invention, useful for understanding the invention;
Figure 2 is a schematic view of an array of light sources in an example display; and,
Figure 3 is a flow chart illustrating a slow field sequential imaging method.

Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

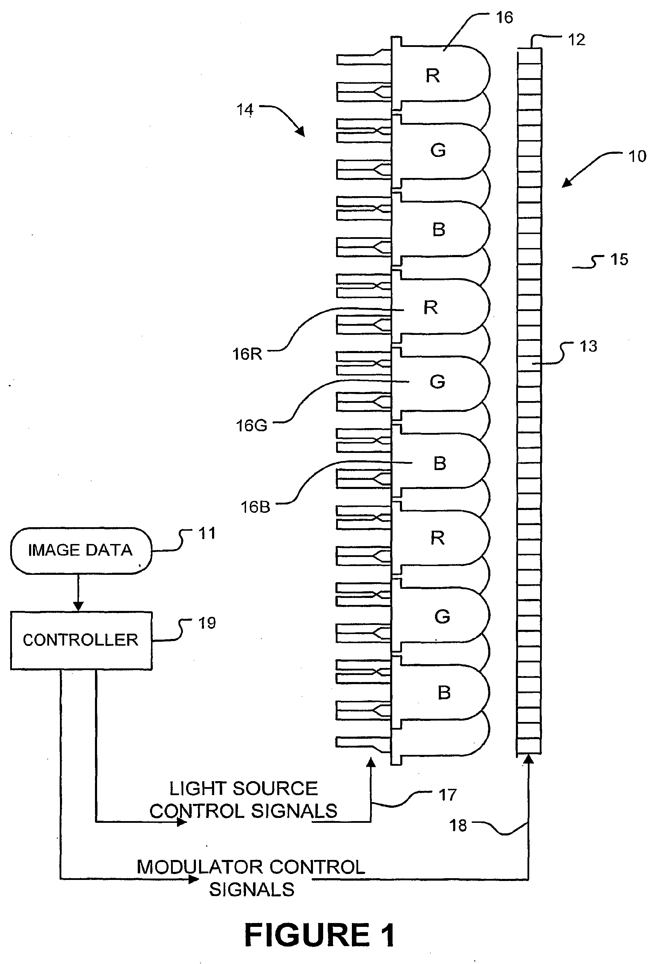

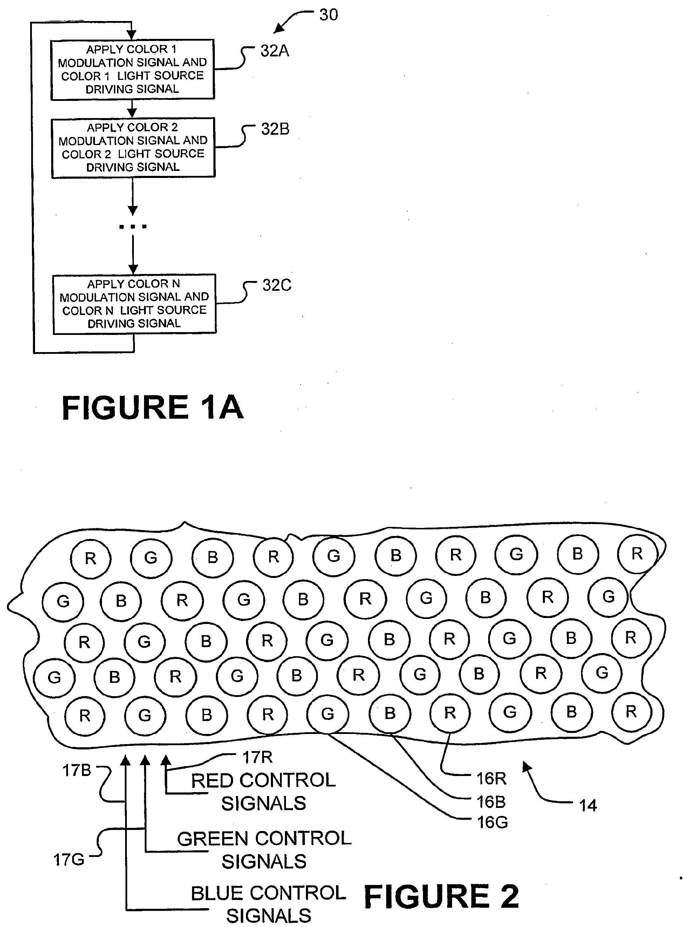

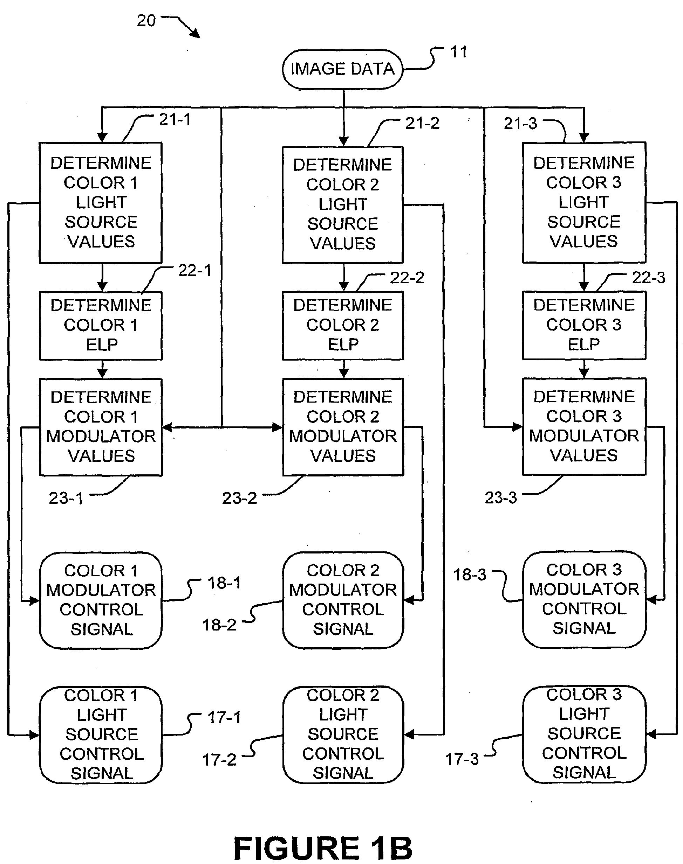

Figure 1 is a schematic view of a display **10**. Display **10** comprises a modulator **12**. Modulator **12** comprises a plurality of pixels **13**. Modulator **12** modulates light from a backlight **14** comprising an array of light sources **16**. In some cases, light sources **16** are light-emitting diodes (LEDs).

Modulator **12** may be a transmission-type modulator, such as an LCD panel, in which the amount of light transmitted through each pixel **13** can be varied, or a reflectance-type modulator. In some cases, modulator **12** comprises a gray-scale modulator such as a monochrome LCD panel or a digital mirror array.

The light sources of array **14** include independently-controllable light sources of each of a plurality of colors. The colors of the light sources can be combined with one another in different proportions to produce colors within a color gamut. For example, the colors may be red green and blue. These colors can be mixed to provide any color within the RGB color gamut. In the illustrated embodiment, the light sources comprise red light sources **16R**, green light sources **16G** and blue light sources **16B**. The light sources are typically arranged so that light sources of each color are distributed substantially uniformly through array **14**. Figure 2 shows a possible arrangement of light sources in array **14**.

The symmetrical arrangement of light sources **16** permits light sources **16** to provide relatively uniform illumination of the active area of modulator **12** with light of any one of the colors for which there are light sources **16**. Preferably the point spread functions of adjacent light sources **16** of each color overlap with one another.

It is not necessary that the maximum intensity of all of light sources **16** be the same. For example, it is convenient to use LEDs for the light sources. LEDs of different colors tend to have different efficiencies. Typically the efficiency (the amount of light generated for a given electrical power) of green LEDs is greater than that of red LEDs. Typical red and green LEDs have greater efficiencies than typical blue LEDs. Up to a point, one can obtain brighter LEDs of any available color at greater expense. Those who design displays can select appropriate LEDs on the basis of factors such as maximum light output, electrical power requirements, and cost. Currently it is common to find it most cost effective to provide red, green and blue LEDs having flux ratios of approximately 3:5:1. With such a flux ratio, the red LEDs are three times brighter than the blue LEDs and the green LEDs are five times brighter than the blue LEDs.

In some cases, the number of light sources **16** of each color in array **14** is at least approximately inversely proportional to the flux ratio of the light sources. For example, where an array has light sources of three colors having flux ratios of 3:5:1, then the numbers of light sources of each of the three colors in the array could be in the ratio 5:3:15. The light sources of each color are substantially uniformly distributed on the array. In some cases, the point spread functions of the light sources of each color have widths that increase with the spacing between adjacent light sources of that color. The point spread functions of the light sources of one color may have widths that are in direct proportion to the spacing between adjacent light sources of that color in array **14**.

Each light source **16** illuminates at least part of the active area of modulator **12**. Light sources **16** of different colors in different areas of array **14** are independently controllable. Figure 2 shows light source control signals **17R**, **17G** and **17B** which respectively control the intensities of light emitted by red, green and blue light sources in array **14**. The intensities of light sources **16** in different areas of array **14** can be varied to project a desired luminance pattern onto the active area of modulator **12**. The luminance pattern may be predicted by, for each point on the active area of modulator **12**, adding together the luminance contributed by each of the light sources **16** that contributes significantly to the luminance at that point.

Display **10** may be operated to display a color image in a frame sequential mode wherein the operation of the light sources in array **14** is time multiplexed. Figure 1A discloses a simple frame sequential method **30** lying outside the scope of the claimed invention, but useful for understanding the invention. In block **32A**, a first modulator signal is applied to modulator **12** and a first light source driving signal is applied to those light sources **16** that are of the first color. The light sources **16** create a first luminance pattern of the first color on the active area of modulator **12**. The first luminance pattern varies in intensity over the active area of modulator **12** according to data embodied in the first light source driving signal. The pixels **13** of modulator **12** further modulate the light as it passes to a viewing area **15**. Where modulator **12** is a monochrome modulator, modulator **12** cannot correct individual colors by adjusting colour filter settings (since monochrome modulators generally lack color filters).

Method **30**, which -as said- lies outside the scope of the claimed invention, sequentially executes blocks **32B** and **32C** which apply modulation and light source driving signals for other colors. After the last ($N$th) set of modulation and light source driving signals has been applied, method **30** loops back to block **32A**.

Preferably method **30**, which -as said- lies outside the scope of the claimed invention, cycles through blocks **32A**, **32B** and **32C** quickly enough that a person looking at viewing area **15** perceives a color image that does not flicker annoyingly. The human visual system generally ignores flicker that occurs at frequencies above roughly 50 Hz to 60 Hz.

In some cases, method **30** is repeated at a rate of at least 50 to 60 Hz. Where there are three colors (such as red, green and blue) this would require modulator **12** to operate at a rate of about 150 to 180 Hz. In cases where method **30** is used to drive a display **10** at relatively high rates then modulator **12** must be of a type that can support those rates.

Display may include a controller **19** that generates suitable light source control signals **17** and modulator control signals **18** to display a desired image. The desired image may be specified by image data **11** which directly or indirectly specifies color values for each pixel. Image data **11** may have any suitable format and may specify luminance and color values using any suitable color model. For example, image data **11** may specify:

- red, green and blue (RGB) color values for each pixel;
- YIQ values wherein each pixel is represented by a value (Y) referred to as the luminance and a pair of values (I, Q) referred to as the chrominance;
- CMY or CMYK values;
- YUV values;
- YCbCr values;
- HSV values; or
- HSL value s

Figure 1B shows a method **20**, also lying outside the scope of the claimed invention, but useful for understanding the invention for generating light source control signals **17** and modulator control signals **18**. Method **20** begins by generating light source control signals **17** from image data **11**. This is performed separately in blocks **21-1**, **21-2** and **21-3** for each color of light source in array **14**. In the case of Figure 1B, light source control signals **17** include signals **17-1**, **17-2** and **17-3**, each of which controls one color of LED in array **14**.

Light source control signals **17** may be generated by determining in controller **19** an intensity for driving each of LEDs **16** such that light sources **16** project desired luminance patterns onto the active area of modulator **12** for each color. Preferably, for each of the colors, the luminance of the luminance pattern at each pixel **13** is such that a luminance specified for that pixel **13**, for that color, by image data **11** can be achieved within the range of modulation of the pixel. That is, it is desirable that the luminance **L** be such that:

$$L \ X \ T_{MIN} \ \leq \ L_{IMAGE} \ \leq \ L \ X \ T_{MAX} \tag{1}$$

where: $T_{MIN}$ is the minimum transmissivity of a pixel; $T_{MAX}$ is the maximum transmissivity of the pixel; and $L_{IMAGE}$ is the luminance for the pixel for that color specified by image data **11**.

Controller **19** may generate modulator control signals **18** by, for each color, for each pixel **13** of modulator **12**, dividing the desired luminance specified by image data **11** by the luminance at that element provided by array **14** when driven by the component of light source control signal **17** for that color.

The luminance provided by light source array **14** may be termed an effective luminance pattern ELP. In the method 20 lying outside the scope of the claimed invention, since each color is applied at a separate time, the ELP may be computed separately for each color and the computation to determine modulator control signals **18** may be performed independently for each color.

Method **20**, which -as said- lies outside the scope of the claimed invention, computes ELPs for each color of light in blocks **22-1**, **22-2**, and **22-3**. Method **20** determines the modulator control signal for each color in blocks **23-1**, **23-2** and **23-3**. In the case of Figure 1B, modulator control signals **18** include signals **18-1**, **18-2** and **18-3** which respectively control the modulator to modulate light from the light sources of first, second and third colors in array **14**.

It can be appreciated that method **30** can be energy efficient for a number of reasons including:

- Modulator **12** may be a monochrome modulator. Monochrome modulators can be made so that a greater proportion of the active area of the modulator is effective to pass light than is possible for typical color modulators.
- Where modulator **12** is a monochrome modulator, no light is absorbed in color filters in the modulator.

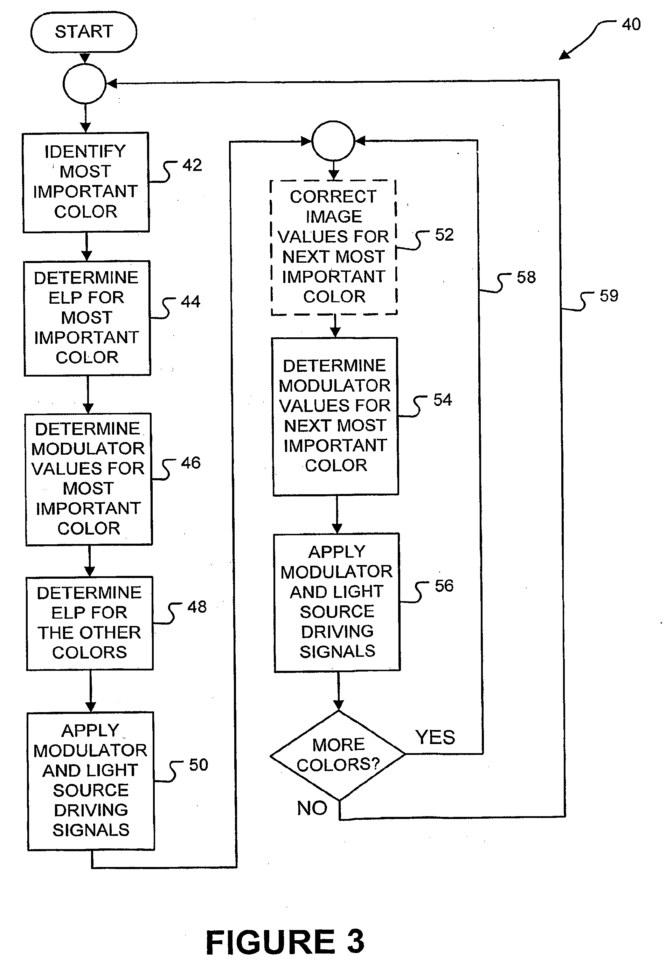

Figure 3 shows a method **40** for displaying color images according to the invention. Method **40** may be practiced with apparatus as shown in Figure 1. Method **40** is advantageous in situations where modulator **12** cannot be refreshed fast enough to practice method **30** without undesirable flicker.

Method **40** may be practiced separately for different parts of the active area of modulator **12**. Each part of the active area is illuminated by a cluster of light sources of array **14** that include light sources of all of the different colors represented in array **14**. In block **42** method **40** determines the color that is most important for the part being considered. Preferably block **42** ranks colors from the most important color for the part (ranked first) to the least important color for the part.

Which color is "most important" may be determined in any suitable manner. For example, the colors may be ranked according to any one of or any combination of the following:

- Which colors have the highest average brightness per pixel in the part. The color having the highest average brightness in the part is ranked first. Colors having higher average brightness are ranked higher than colors having lower average brightness. The average brightness may be determined for example, by summing the brightnesses for each color for each pixel in the part.
- Which colors have the highest average pixel values in the part as specified in the signals. The color having the highest average pixel value is ranked first. Colors having higher average pixel values are ranked higher than colors having lower average pixel values. The average pixel values may be determined for example, by summing the pixel values for each color for each pixel in the part. The pixel values are related to brightness by scaling factors that take into account the fact that the human visual system is more sensitive to some colors than it is to others.
- Which colors have the maximum brightness for any pixel in the part. Colors having higher maximum brightness are ranked higher than colors having lower maximum brightness.
- Which colors have the maximum pixel value for any pixel in the part. Colors having higher maximum pixel values are ranked higher than colors having lower maximum pixel values.
- Which color has the maximum variation in brightness or pixel value or some combination of brightness and pixel value over the part. The variation may be a range which may be determined by subtracting the minimum brightness for a color in the part from the maximum brightness for the color in the part or another measure of variation. Colors having greater variation in the part are ranked higher than colors having smaller variations in the part.
- Which color exhibits the greatest degree of spatial clustering in the part. Colors having greater degrees of spatial clustering in the part may be assigned higher priorities than colors exhibiting smaller degrees of spatial clustering in the part. Where a large number of contiguous pixels in the part have similar pixel values for a color then the color has a large degree of spatial clustering.

Where more than one of the above factors are used to rank colors for a part of the active area of modulator **12** then any suitable weighting of the different factors may be used. Those skilled in the art will understand that the weighting may be fine tuned to provide the best reproduction of images of a certain type or to provide desired effects.

In block **44**, a desired effective luminance pattern (ELP) is established for the most important (highest ranked) color identified in block **42**. The ELP is established as described above.

Block **46** determines modulator values for the most important color. The modulator values are determined by dividing a desired luminance for each pixel in the part (as specified by image data **11**) by the luminance for that pixel provided by the ELP established in block **44**.

Block **48** determines desired ELPs for the other colors of light sources in array **14**. The ELPs for the other colors are obtained approximately by dividing the desired luminance for each pixel (as specified by image data **11**) by the modulator values determined in block **46** for the most important color.

Block **50** generates and applies to modulator **12** a modulator control signal which controls the pixels of modulator **12** to have the values determined in block **46** and generates and applies to array **14** light source control signals which cause the light sources **16** of array **14** to illuminate the active area of modulator **12** with light having intensity that, for each color, varies over the active area of modulator **12** according to the ELP for that color determined in block **44** or **48**.

Blocks **44** to **50** ensure that, for each part of modulator **12**, the most important color identified in block **42** is accurately represented since the ELP and modulator values are both selected for that most important color. The most important color may be different in different parts of modulator **12**. Other colors in the image of image data **11** are reproduced approximately.

In many cases, the image displayed by performing blocks **42** to **50** will be fairly accurate because, in typical images, it is common for some parts of the image to be single-colored. In single-colored parts of the image only the most important color needs to be represented. Further, in typical images, some parts of the image will be gray. In parts of the image that are predominantly a shade of gray, similar modulator values would be selected for all of the colors and so, in grey parts, using a modulator value determined for the most important color is also reasonably accurate for other lower-ranked colors.

Block **54** determines modulator values for each part of modulator **12** for the second most important color in the part. The modulator values may be determined in the same manner that modulator values for the most important color are determined in block **46**. In block **56**, driving signals are delivered to array **14** and modulator **12**. Modulator **12** is driven with the driving signals which set the pixels of modulator **12** to the modulator values determined in block **54** for the second most important color in each part.

As noted above, block **50** usually does not perfectly reproduce the image specified by image data **11** for colors other than the color identified as the most important color. In block **50**, in some pixels a lower ranked color may be brighter than specified by image data **11**, while in other pixels the color may be dimmer than specified by image data **11**.

Block **56** may optionally compensate for the errors in reproduction of the second most important colors. In the illustrated embodiment, this is done by applying correction factors to the pixel values for the second most important color in block **52**. Pixel values modified by the correction factors are used in block **54** to determine the modulator values for the color. For example, if block **50** results in the intensity of a second most important color in a pixel being 15% greater than specified by image data **11** then block **52** may apply a correction factor to the pixel value for the second most important color so that in block **56** the intensity of the second most important color for that pixel is reduced by 15%.

For example, consider a pixel for which image data **11** specifies RGB values of 200, 100, 50. In the part of modulator **12** in which the pixel is located, the colors are ranked in the order: red, green blue. Suppose, block **50** actually causes the light intensities of the pixel to have the values red: 200; green: 80; and blue: 60. If block **52** were not performed then, in block **56** the green intensity of the pixel would be 80 instead of the desired value 100. By performing block **52** the intensity of green light emitted by the pixel in block **56** can be increased to compensate for the fact that the green intensity of the pixel was lower than desired in block **50**. For example, block **52** could adjust the desired value for the pixel so that the green intensity of the pixel in block **56** is 120 instead of 100. The green intensity of the pixel will then average to the desired value of 100.

In cases where loop **58** is performed for a tertiary color then the correction of block **52** should be determined to obtain the desired value for each color averaged over block **50** and all repetitions of block **56**.

It can be appreciated that method **40** sequentially changes the values for the pixels of modulator **12**. Except in unusual cases (for example, monochrome images) array **14** provides light of all colors for each setting of modulator **12**. For the case in which there are three colors with correction provided for all colors, for each color, the accuracy with which that color component of the image is displayed varies across subsequent frames as: "perfect" → "average" → "average" →perfect" etc. In a pure field sequential display method, differently from the invention and as discussed above, each color is displayed only during a sub-frame during which the color is properly displayed. However, the color is "off" in other sub-frames.

For each color, with a method such as method **40** the net variation in intensity between subsequent frames or sub-frames will thus be much smaller most of the time than in a pure field sequential display method. The reduced fluctuation in color intensity as compared to pure field sequential methods makes it possible to operate at reduced frame rates while avoiding artefacts that result from large fluctuations in the intensity of a color, such as color break up. For example, method **40** may be practiced so that subsequent display blocks **50** and **56** are performed at a low rate. For example, less than 110 Hz. The rate is as low as 50-60 Hz in some embodiments. Method **40** can provide benefits in perceived image quality at higher rates as well.

Block **52** may limit the amount of correction provided to avoid undesirable flicker. If for example, a single pixel of the second-ranked colour is dimmer than it should be by 80%, increasing the brightness of that pixel by 80% in the next frame could cause undesirable perceptible flicker. Block **52** may simply cut off compensation at a certain point, for example, block **52** may clip the intensity of a pixel at 150% of its pixel value. In the alternative, block **52** may implement a non-linear correction scale such that small corrections are made completely whereas larger corrections are reduced. For example, an adjustment table such as Table I may be provided.

| TABLE I - EXAMPLE NON-LINEAR CORRECTION TABLE | |
|---|---|
| Amount too dim in first frame | Amount of increase in next frame |
| 10% | 10% |
| 30% | 25% |
| 50% | 35% |
| 60% | 45% |

Optionally block **52** determines a new ELP for the second most important color. Typically this is not necessary as in many real images the correction factors will be small enough that the corrected brightness for the pixel can be achieved by varying modulator values.

In some cases, blocks **52** to **56** are repeated for colors of tertiary or lower ranking as indicated by loop **58**. After all desired repetitions of blocks **52** to **56**, method **40** loops back to block **42** as indicated by line **59**. In some cases, for at least some least important colors, modulator values are not set.

In some cases, block **54** ensures that the modulator values do not differ from the most recent previous modulator values by more than some threshold amount. This may be done on a pixel-by-pixel basis or for larger parts of the active area. Preventing the modulator values from changing too radically between block **50** and block **56** (or between sequential iterations of block **56**) can help to avoid perceptible flicker.

Where method **40** is being used to display a sequence of frames that make up a video image, rather than a still image, blocks **50** and each repetition of block **56** (if block **56** is repeated e.g. for secondary and tertiary colors) may display a separate frame of the video sequence. In the alternative, if modulator **12** can be switched fast enough, blocks **50** and **56** may be repeated for each frame of the video sequence.

In some cases, only less important colors are corrected as described above. The most important colors may each be displayed in a separate sub frame. For example, consider a case where the colors in a part are ranked in order red, green, blue. In a first sub-frame array **14** could illuminate modulator **12** with red light only. The signals driving modulator **12** could be selected to properly reproduce the red color. In a second sub-frame, array **14** illuminates modulator **12** with green and blue light only. The signals driving modulator **12** could be selected to properly reproduce green. The level of blue could be corrected in subsequent frames, as described above. In such cases, modulator **12** should operate quickly enough that flicker is not perceptible. For example, modulator **12** may be operated at a rate of 120Hz or more so that the two most important colors (red and green in this example) are both properly displayed inside one 60Hz frame. Less important colors are corrected over subsequent frames.

Software for implementing the invention may provide adjustable parameters which control things such as the amount of variation permitted for any pixel between sequential frames; the maximum amount of correction for a color provided in a frame; the method by which colors are ranked; the manner in which the active area of the modulator is divided into parts; and so on.

Certain implementations of the invention comprise computer processors which execute software instructions which cause the processors to perform a method of the invention. For example, one or more processors in a display driver **19** may implement the method of Figure 3 executing software instructions in a program memory accessible to the processors. The invention may also be provided in the form of a program product. The program product may comprise any medium which carries a set of computer-readable signals comprising instructions which, when executed by a computer processor, cause the data processor to execute a method of the invention. Program products according to the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like or transmission-type media such as digital or analog communication links.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

As will be apparent to those skilled in the art in the light of the foregoing disclosure, many alterations and modifications are possible in the practice of this invention without departing from the scope thereof. For example:

- The method of this invention may be applied in cases where there are two, three, four or more colors.
- The parts of the active area of modulator **12** within which the most important colors are identified do not necessarily correspond with one cluster of light sources in array **14**. For example, where array **14** comprises a plurality of clusters each having one red, one green and one blue light source, the parts over which block **42** of method **40** determines the most important color may correspond to one or several such clusters of light sources. In some embodiments of the invention acceptable performance may be achieved by treating the entire active area of modulator **12** as a single part so that the entire area of modulator **12** uses one colour priority.
- Instead of determining color priority for parts of modulator **12** which include groups of pixels, colour priority may be computed for "parts" which each include only one pixel. In such cases, what is the most important color for the pixel may be determined with reference to what color is specified by image data **11** as being brightest in that pixel.
- The "colors" discussed in each embodiment of the invention do not need to be "sharp" or "narrow bandwidth" primary colors. The colors could be blends of two or more primary colors. Having narrow bandwidth primaries tends to yield a wider colour gamut. In some embodiments of the invention, ranking the colors may comprise identifying linear combinations of primary colors for each of the parts and treating the linear combinations as the most important, second most important, third most important, etc. colors. For example, for a specific part of a specific image, the most important color might be identified as an equal mixture of red and blue.
- The time intervals are not necessarily all equal in length.
- The modulator may comprise a number of separate modulators that each modulate a different part of an image.

While a number of exemplary aspects and embodiments have been discussed above, those of skill in the art will recognize certain modifications, permutations, additions and sub-combinations thereof. It is therefore intended that the following appended claims are interpreted to include all such modifications, permutations, additions and sub-combinations as are within the scope of these claims.

**Claims**

1. A method (40) for displaying images at a viewing area (15), the method (40) comprising the steps of:

   providing an array (14) comprising a plurality of groups (16R, 16B, 16G) of individually-controllable light sources (16), the light sources (16) of each group (16R, 16B, 16G) emitting light of a corresponding one of a plurality of colors;
   providing a modulator (12) having an active area comprising a plurality of pixels (13); and
   providing a control circuit (19) configured for generating light source control signals (17) for driving the light sources (16) to project light onto the active area of the modulator (12), and modulator control signals (18) for controlling the pixels (13) of the modulator (12) to vary a proportion of light incident on the active area that is passed to the viewing area (15),

   wherein the array (14) is operable to project a luminance pattern which has a variation in intensity over the active area for each of the plurality of colors; and in that the control circuit (19) is further configured for:

   - ranking (42) the plurality of colors in order of importance wherein a first color is determined to be more important than other ones of the plurality of colors;
   - establishing (44) a first effective luminance pattern for a first one of the groups (16R, 16B, 16G) of light sources (16) in the array (14) corresponding to the first color, the first effective luminance pattern indicating variations in intensity of the light of the first color (44) over the active area and being such that a luminance specified for each pixel (13), for the first color, by image data (11) can be achieved within the range of modulation of the pixel (13);

   **characterized in that** the method further comprises the steps of:

   - determining (46) first modulator values (18) by dividing a desired luminance for each pixel (13) as specified in the image data (11) for the first color by the luminance for that pixel (13) provided by the first effective luminance pattern;
   - establishing (48) a second effective luminance pattern for a second one of the groups (16R, 16B, 16G) of light sources (16) in the array (14) corresponding to a second color, the second effective luminance pattern indicating variations in intensity of the light of the second color (48) over the active area and being obtained by dividing the values specified in the image data (11) for the second color by the first modulator values (18);
   - and applying said control signals (17, 18) for driving (50) the first group (16R, 16B, 16G) of light sources (16) with a first light-source-driving signal (17) such that the first group (16R, 16B, 16G) of light sources (16) projects the first effective luminance pattern onto the active area of the modulator (12), for driving (50) the second group (16R, 16B, 16G) of light sources (16) with a second light-source-driving signal (17) such that the second group (16R, 16B, 16G) of light sources (16) projects the second effective luminance pattern onto the active area of the modulator (12), and for controlling (50) the pixels (13) of the modulator (12) to selectively allow light of the first color and the second color from the active area to pass to the viewing area (15) based on the first modulator values (18).

2. A method (40) according to claim 1 wherein ranking (42) the colors comprises identifying the one of the colors for which the image data (11) specifies a greatest average pixel value.

3. A method (40) according to claim 1 wherein ranking (42) the colors comprises identifying the one of the colors for which the image data (11) specifies a greatest average brightness.

4. A method (40) according to claim 1 wherein ranking (42) the colors comprises identifying the one of the colors for which the image data (11) specifies a greatest individual pixel value.

5. A method (40) according to claim 1 wherein ranking (42) the colors comprises identifying the one of the colors for which the image data (11) specifies a greatest individual pixel brightness.

6. A method (40) according to claim 1 wherein ranking (42) the colors comprises identifying the one of the colors for which the image data (11) specifies a greatest variation in pixel values.

7. A method (40) according to claim 1 wherein ranking (42) the colors comprises identifying the one of the colors for which the image data (11) specifies a greatest variation in brightness.

8. A method (40) according to claim 1 wherein ranking (42) the colors comprises a combination of one or more of:

identifying the one of the colors for which the image data (11) specifies a greatest average pixel value;
identifying the one of the colors for which the image data (11) specifies a greatest average brightness;
identifying the one of the colors for which the image data (11) specifies a greatest individual pixel value;
identifying the one of the colors for which the image data (11) specifies a greatest individual pixel brightness;
identifying the one of the colors for which the image data specifies a greatest variation in pixel values;
identifying the one of the colors for which the image data (11) specifies a greatest variation in brightness;
identifying the one of the colors for which the image data (11) specifies a maximum degree of spatial clustering; or,
a combination of two or more of these.

9. A method (40) according to claim 1 performed separately for each of a plurality of parts of the modulator (12), each of the parts comprising a plurality of pixels (13) of the modulator (12).

10. A method (40) according to claim 1 wherein the image data (11) comprises red, green, and blue color values.

11. A method (40) according to claim 1 wherein the image data (11) comprises video data comprising a plurality of frames and the method (40) is repeated for each of the frames of the video data.

12. Apparatus (10) for displaying images at a viewing area (15), the apparatus (10) comprising:

an array (14) comprising a plurality of groups (16R, 16B, 16G) of individually- controllable light sources (16), the light sources (16) of each group (16R, 16B, 16G) emitting light of a corresponding one of a plurality of colors;
a modulator (12) having an active area comprising a plurality of pixels (13), the active area illuminated by the array (14), each pixel (13) controllable to vary a proportion of light incident on the active area that is passed to the viewing area (15); and,
a control circuit (19) configured to generate light source control signals (17) for driving the light sources (16) and modulator control signals (18) for controlling the pixels (13) of the modulator (12), wherein the array (14) is operable to project a luminance pattern which has a variation in intensity over the active area for each of the plurality of colors; and

the control circuit (19) is configured to:

rank (42) the plurality of colors in order of importance wherein a first color is determined to be more important than other ones of the plurality of colors;
establish (44) a first effective luminance pattern for a first one of the groups (16R, 16B, 16G) of light sources (16) in the array (14) corresponding to the first color, the first effective luminance pattern indicating variations in intensity of the light of the first color (44) over the active area and being such that a luminance specified for each pixel (13), for the first color, by image data (11) can be achieved within the range of modulation of the pixel (13);
determine (46) first modulator values (18) by dividing a desired luminance for each pixel (13) as specified in the image data (11) for the first color by the luminance for that pixel (13) provided by the first effective luminance pattern;
**characterized in that** the control circuit is further configured to: establish (48) a second effective luminance pattern for a second one of the groups (16R, 16B, 16G) of light sources (16) in the array (14) corresponding to a second color, the second effective luminance pattern indicating variations in intensity of the light of the second color (48) over the active area and being obtained by dividing the values specified in the image data (11) for the second color by the first modulator values (18);
apply said control signals (17, 18) for driving (5) the first group (16R, 16B, 16G) of light sources (16) with a first light-source-driving signal (17) such that the first group (16R, 16B, 16G) of light sources (16) projects the first effective luminance pattern onto the active area of the modulator (12), for driving (50) the second group (16R, 16B, 16G) of light sources (16) with a second light-source-driving signal (17) such that the second group (16R, 16B, 16G) of light sources (16) projects the second effective luminance pattern onto the active area of the modulator (12), and for controlling (50) the pixels (13) of the modulator (12) to selectively allow light from the active area of the first color and the second color to pass to the viewing area (15) based on the first modulator values (18).

**13.** Apparatus (10) according to claim 12 wherein the modulator (12) is a transmissive modulator (12).

**14.** Apparatus (10) according to claim 13 wherein the modulator (12) comprises an LCD panel.

**15.** Apparatus (10) according to claim 14 wherein the LCD panel is a grey scale LCD panel.

**16.** Apparatus (10) according to claim 12 wherein the modulator (12) is a reflective modulator (12).

**17.** Apparatus (10) according to claim 12 comprising at least three groups (16R, 16B, 16G) of light sources (16).

**18.** Apparatus (10) according to claim 17 wherein the three groups (16R, 16B, 16G) of light sources (16) include a red group (16R) of light sources (16) that emit red light, a green group (16G) of light sources (16) that emit green light and a blue group (16B) of light sources (16) that emit blue light.

**19.** Apparatus (10) according to claim 12 wherein the light sources (16) comprise light-emitting diodes.

**20.** Apparatus (10) according to claim 12 wherein two or more of the groups (16R, 16B, 16G) of light sources (16) are made up of different numbers of light sources (16).

**21.** Apparatus (10) according to claim 20 wherein the light sources (16) of each of the groups (16R, 16B, 16G) of light sources (16) are evenly distributed relative to the modulator (12).

**22.** Apparatus (10) according to claim 12 wherein point spread functions of adjacent ones of the light sources (16) within each of the groups (16R, 16B, 16G) overlap with one another.

**23.** Apparatus (10) according to claim 22 wherein a ratio of an average spacing between adjacent ones of the light sources (16) in any one of the groups (16R, 16B, 16G) of light sources (16) to a width of a point spread function of the light sources (16) in the group (16R, 16B, 16G) of light sources (16) is the same within $\pm 20\%$ for all of the groups (16R, 16B, 16G) of light sources (16) in the array (14).

**24.** Apparatus (10) according to claim 12 wherein the control circuit (19) comprises a data processor executing software instructions.

**25.** Apparatus (10) according to claim 12 wherein the control circuit (19) is configured to rank (42) the colors by identifying the one of the colors for which the image data (11) specifies a greatest average pixel value.

**26.** Apparatus (10) according to claim 12 wherein the control circuit (19) is configured to rank (42) the colors by identifying the one of the colors for which the image data (11) specifies a greatest average brightness.

**27.** Apparatus (10) according to claim 12 wherein the control circuit (19) is configured to rank (42) the colors by identifying the one of the colors for which the image data (11) specifies a greatest individual pixel value.

**28.** Apparatus (10) according to claim 12 wherein the control circuit (19) is configured to rank (42) the colors by identifying the one of the colors for which the image data (11) specifies a greatest individual pixel brightness.

**29.** Apparatus (10) according to claim 12 wherein the control circuit (19) is configured to rank (42) the colors by identifying the one of the colors for which the image data (11) specifies a greatest variation in pixel values.

**30.** Apparatus (10) according to claim 12 wherein the control circuit (19) is configured to rank (42) the colors by identifying the one of the colors for which the image data (11) specifies a greatest variation in brightness.

**31.** Apparatus (10) according to claim 12 wherein the control circuit (19) is configured to rank (42) the colors by a combination of one or more of:

identifying the one of the colors for which the image data (11) specifies a greatest average pixel value;
identifying the one of the colors for which the image data (11) specifies a greatest average brightness;
identifying the one of the colors for which the image data (11) specifies a greatest individual pixel value;
identifying the one of the colors for which the image data (11) specifies a greatest individual pixel brightness;

identifying the one of the colors for which the image data (11) specifies a greatest variation in pixel values;
identifying the one of the colors for which the image data (11) specifies a greatest variation in brightness;
identifying the one of the colors for which the image data (11) specifies a maximum degree of spatial clustering; or,
a combination of two or more of these.

32. Apparatus (10) according to claim 12 wherein the modulator (12) comprises a plurality of parts, each of the parts comprising a plurality of pixels (13) of the modulator (12), and wherein the control circuit (19) is configured to rank (42) the colors, establish (44) a first effective luminance pattern, determine (46) first modulator values (18), establish (48) a second effective luminance pattern, drive (50) the first and second groups (16R, 16B, 16G) of light sources (16), and control (50) the pixels (13) of the modulator (12) separately for each of the plurality of parts.

33. Apparatus (10) according to claim 12 wherein the image data (11) comprises red, green, and blue color values.

34. Apparatus (10) according to claim 12 wherein the image data (11) comprises video data comprising a plurality of frames and the control circuit (19) is configured to repeat ranking (42) the colors, establishing (44) a first effective luminance pattern, determining (46) first modulator values (18), establishing (48) a second effective luminance pattern, driving (50) the first and second groups (16R, 16B, 16G) of light sources (16), and controlling (50) the pixels (13) of the modulator (12) for each of the frames of the video data.

**Patentansprüche**

1. Verfahren (40) zur Anzeige von Bildern auf einer Betrachtungsfläche (15), wobei das Verfahren (40) folgende Schritte umfasst:

Bereitstellen einer Anordnung (14) umfassend mehrere Gruppen (16R, 16B, 16G) von individuell steuerbaren Lichtquellen (16), wobei die Lichtquellen (16) einer jeden Gruppe (16R, 16B, 16G) Licht emittieren, das einer von mehreren Farben entspricht;
Bereitstellen eines Modulators (12) mit einer aktiven Fläche, umfassend mehrere Pixel (13); und
Bereitstellen einer Steuerschaltung (19), die ausgebildet ist, um Lichtquellensteuersignale (17) zum Treiben der Lichtquellen (16) zu erzeugen, damit diese das Licht auf eine aktive Fläche eines Modulators (12) projizieren, und Modulatorsteuersignale (18) zum Steuern der Pixel (13) des Modulators (12), um einen Anteil des auf die aktive Fläche einfallenden Lichts zu ändern, das auf die Betrachtungsfläche (15) geleitet wird,

wobei die Anordnung (14) betrieben werden kann, um ein Luminanzmuster zu projizieren, das eine Intensitätsvariation über die aktive Fläche für jede der mehreren Farben aufweist; und wobei die Steuerschaltung (19) ferner ausgebildet ist zum:

- Ordnen (42) der mehreren Farben nach ihrer Wichtigkeit, wobei festgelegt wird, dass eine erste Farbe wichtiger als die übrigen der mehreren Farben ist;
- Festlegen (44) eines ersten wirksamen Luminanzmusters für eine erste der Gruppen (16R, 16B, 16G) von Lichtquellen (16) in der Anordnung (14), das der ersten Farbe entspricht, wobei das erste wirksame Luminanzmuster Intensitätsvariationen des Lichts der ersten Farbe (44) über die aktive Fläche anzeigt und derart ist, dass ein für jedes Pixel (13), für jede Farbe genau angegebenes Luminanzmuster durch Bilddaten (11) innerhalb des Modulationsbereichs des Pixels (13) erzielt werden kann;

**dadurch gekennzeichnet, dass** das Verfahren ferner folgende Schritte umfasst:

- Festlegen (46) der ersten Modulatorwerte (18) durch Teilen einer für jedes Pixel (13) gewünschten Luminanz wie in den Bilddaten (11) für die erste Farbe durch die Luminanz für das vom ersten wirksamen Luminanzmuster bereitgestellte Pixel (13) angegeben ist;
- Festlegen (48) eines zweiten wirksamen Luminanzmusters für eine zweite der Gruppen (16R, 16B, 16G) von Lichtquellen (16) in der Anordnung (14), das einer zweiten Farbe entspricht, wobei das zweite wirksame Luminanzmuster Intensitätsvariationen des Lichts der zweiten Farbe (48) über die aktive Fläche anzeigt und durch Teilen der in den Bilddaten (11) für die zweite Farbe durch die ersten Modulatorwerte (18) angegebenen Werte erhalten wird;
- und Anlegen der Steuersignale (17, 18) zum Treiben (50) der ersten Gruppe (16R, 16B, 16G) von Lichtquellen (16) mit einem ersten Lichtquellentreibersignal (17), derart, dass die erste Gruppe (16R, 16B, 16G) von Licht-

EP 1 831 752 B1

quellen (16) das erste wirksame Luminanzmuster auf die aktive Fläche des Modulators (12) projiziert, zum Treiben (50) der zweiten Gruppe (16R, 16B, 16G) von Lichtquellen (16) mit einem zweiten Lichtquellentreibersignal (17), derart, dass die zweite Gruppe (16R, 16B, 16G) von Lichtquellen (16) das zweite wirksame Luminanzmuster auf die aktive Fläche des Modulators (12) projiziert, und zum Steuern (50) der Pixel (13) des Modulators (12), um es dem Licht der ersten Farbe und der zweiten Farbe wahlweise zu ermöglichen, aus der aktiven Fläche zur Betrachtungsfläche (15) basierend auf den ersten Modulatorwerten (18) überzugehen.

2. Verfahren (40) nach Anspruch 1, wobei das Ordnen (42) der Farben das Identifizieren der einen der Farben umfasst, für die die Bilddaten (11) einen größten durchschnittlichen Pixelwert angeben.

3. Verfahren (40) nach Anspruch 1, wobei das Ordnen (42) der Farben das Identifizieren der einen der Farben umfasst, für die die Bilddaten (11) eine größte durchschnittliche Helligkeit angeben.

4. Verfahren (40) nach Anspruch 1, wobei das Ordnen (42) der Farben das Identifizieren der einen der Farben umfasst, für die die Bilddaten (11) einen größten individuellen Pixelwert angeben.

5. Verfahren (40) nach Anspruch 1, wobei das Ordnen (42) der Farben das Identifizieren der einen der Farben umfasst, für die die Bilddaten (11) eine größte individuelle Pixelhelligkeit angeben.

6. Verfahren (40) nach Anspruch 1, wobei das Ordnen (42) der Farben das Identifizieren der einen der Farben umfasst, für die die Bilddaten (11) eine größte Pixelwertvariation angeben.

7. Verfahren (40) nach Anspruch 1, wobei das Ordnen (42) der Farben das Identifizieren der einen der Farben umfasst, für die die Bilddaten (11) eine größte Helligkeitsvariation angeben.

8. Verfahren (40) nach Anspruch 1, wobei das Ordnen (42) der Farben eine Kombination eines oder mehrerer der Folgenden umfasst:

   Identifizieren der einen der Farben, für die die Bilddaten (11) einen größten durchschnittlichen Pixelwert angeben;
   Identifizieren der einen der Farben, für die die Bilddaten (11) eine größte durchschnittliche Helligkeit angeben;
   Identifizieren der einen der Farben, für die die Bilddaten (11) einen größten individuellen Pixelwert angeben;
   Identifizieren der einen der Farben, für die die Bilddaten (11) eine größte individuelle Pixelhelligkeit angeben;
   Identifizieren der einen der Farben, für die die Bilddaten (11) eine größte Pixelwertvariation angeben;
   Identifizieren der einen der Farben, für die die Bilddaten (11) eine größte Helligkeitsvariation angeben;
   Identifizieren der einen der Farben, für die die Bilddaten (11) einen Höchstgrad an räumlicher Häufung angeben; oder
   eine Kombination zweier oder mehrerer hiervon.

9. Verfahren (40) nach Anspruch 1, das für jedes von mehreren Teilen des Modulators (12) getrennt ausgeführt wird, wobei jedes der Teile mehrere Pixel (13) des Modulators (12) umfasst.

10. Verfahren (40) nach Anspruch 1, wobei die Bilddaten (11) rote, grüne und blaue Farbwerte umfassen.

11. Verfahren (40) nach Anspruch 1, wobei die Bilddaten (11) Videodaten umfassen, die mehrere Blöcke umfassen und wobei das Verfahren (40) für jeden der Videodatenblöcke wiederholt wird.

12. Vorrichtung zur Anzeige von Bildern auf einer Betrachtungsfläche (15), wobei die Vorrichtung (10) Folgendes umfasst:

   eine Anordnung (14) umfassend mehrere Gruppen (16R, 16B, 16G) von individuell steuerbaren Lichtquellen (16), wobei die Lichtquellen (16) einer jeden Gruppe (16R, 16B, 16G) Licht emittieren, das einer von mehreren Farben entspricht;
   einen Modulator (12) mit einer aktiven Fläche, umfassend mehrere Pixel (13), wobei die aktive Fläche durch die Anordnung (14) beleuchtet wird, jedes Pixel (13) steuerbar ist, um einen Anteil des auf die aktive Fläche einfallenden Lichts zu variieren, das auf die Betrachtungsfläche (15) geleitet wird; und
   eine Steuerschaltung (19), die ausgebildet ist, um Lichtquellensteuersignale (17) zum Treiben der Lichtquellen (16) und Modulatorsteuersignale (18) zum Steuern der Pixel (13) des Modulators (12) zu erzeugen,

12

wobei die Anordnung (14) betrieben werden kann, um ein Luminanzmuster zu projizieren, das eine Intensitätsvariation über die aktive Fläche für jede der mehreren Farben aufweist; und
wobei die Steuerschaltung (19) ausgebildet ist zum:

Ordnen (42) der mehreren Farben nach ihrer Wichtigkeit, wobei festgelegt wird, dass eine erste Farbe wichtiger als die übrigen der mehreren Farben ist;

Festlegen (44) eines ersten wirksamen Luminanzmusters für eine erste der Gruppen (16R, 16B, 16G) von Lichtquellen (16) in der Anordnung (14), die der ersten Farbe entspricht, wobei das erste wirksame Luminanzmuster Intensitätsvariationen des Lichts der ersten Farbe (44) über die aktive Fläche anzeigt und derart ist, dass eine für jedes Pixel (13), für die erste Farbe angegebenes Luminanz durch Bilddaten (11) innerhalb des Modulationsbereichs des Pixels (13) erzielt werden kann;

Festlegen (46) der ersten Modulatorwerte (18) durch Teilen einer für jedes Pixel (13) gewünschten Luminanz wie in den Bilddaten (11) für die erste Farbe durch die Luminanz für das vom ersten wirksamen Luminanzmuster bereitgestellte Pixel (13) angegeben ist;

**dadurch gekennzeichnet, dass** die Steuerschaltung ferner ausgebildet ist zum:

Festlegen (48) eines zweiten wirksamen Luminanzmusters für eine zweite der Gruppen (16R, 16B, 16G) von Lichtquellen (16) in der Anordnung (14), die einer zweiten Farbe entspricht, wobei das zweite wirksame Luminanzmuster Intensitätsvariationen des Lichts der zweiten Farbe (48) über die aktive Fläche anzeigt und durch Teilen der in den Bilddaten (11) für die zweite Farbe durch die ersten Modulatorwerte (18) angegebenen Werte erhalten wird;

Anlegen der Steuersignale (17, 18) zum Treiben (5) der ersten Gruppe (16R, 16B, 16G) von Lichtquellen (16) mit einem ersten Lichtquellentreibersignal (17), derart, dass die erste Gruppe (16R, 16B, 16G) von Lichtquellen (16) das erste wirksame Luminanzmuster auf die aktive Fläche des Modulators (12) projiziert, zum Treiben (50) der zweiten Gruppe (16R, 16B, 16G) von Lichtquellen (16) mit einem zweiten Lichtquellentreibersignal (17), derart, dass die zweite Gruppe (16R, 16B, 16G) von Lichtquellen (16) das zweite wirksame Luminanzmuster auf die aktive Fläche des Modulators (12) projiziert und zum Steuern (50) der Pixel (13) des Modulators (12), um es dem Licht wahlweise zu ermöglichen, aus der aktiven Fläche der ersten Farbe und der zweiten Farbe zur Betrachtungsfläche (15) basierend auf den ersten Modulatorwerten (18) überzugehen.

13. Vorrichtung (10) nach Anspruch 12, wobei der Modulator (12) ein transmissiver Modulator (12) ist.

14. Vorrichtung (10) nach Anspruch 13, wobei der Modulator (12) ein Flüssigkristallanzeigefeld umfasst.

15. Vorrichtung (10) nach Anspruch 14, wobei das Flüssigkristallanzeigefeld ein Grauwert-Flüssigkristallanzeigefeld ist.

16. Vorrichtung (10) nach Anspruch 12, wobei der Modulator (12) ein reflexiver Modulator (12) ist.

17. Vorrichtung (10) nach Anspruch 12, umfassend mindestens drei Gruppen (16R, 16B, 16G) von Lichtquellen (16).

18. Vorrichtung (10) nach Anspruch 17, wobei die drei Gruppen (16R, 16B, 16G) von Lichtquellen (16) eine rote Gruppe (16R) von Lichtquellen (16) aufweisen, die rotes Licht emittieren, eine grüne Gruppe (16G) von Lichtquellen (16), die grünes Licht emittieren und eine blaue Gruppe (16B) von Lichtquellen (16), die blaues Licht emittieren.

19. Vorrichtung (10) nach Anspruch 12, wobei die Lichtquellen (16) lichtemittierende Dioden umfassen.

20. Vorrichtung (10) nach Anspruch 12, wobei zwei oder mehrere der Gruppen (16R, 16B, 16G) von Lichtquellen (16) aus verschiedenen Anzahlen von Lichtquellen (16) zusammengesetzt sind.

21. Vorrichtung (10) nach Anspruch 20, wobei die Lichtquellen (16) einer jeden der Gruppen (16R, 16B, 16G) von Lichtquellen (16) gleichmäßig relativ zum Modulator (12) verteilt sind.

22. Vorrichtung (10) nach Anspruch 12, wobei Punktverteilungsfunktionen von angrenzenden Lichtquellen (16) einer jeden der Gruppen (16R, 16B, 16G) sich gegenseitig überschneiden.

23. Vorrichtung (10) nach Anspruch 22, wobei das Verhältnis eines durchschnittlichen Zwischenraums zwischen angrenzenden Lichtquellen (16) in einer beliebigen der Gruppen (16R, 16B, 16G) von Lichtquellen (16) zu einer Breite einer Punktverteilungsfunktion der Lichtquellen (16) in der Gruppe (16R, 16B, 16G) von Lichtquellen (16) bei allen Gruppen (16R, 16B, 16G) von Lichtquellen (16) in der Anordnung (14) innerhalb von ±20 % gleich ist.

24. Vorrichtung (10) nach Anspruch 12, wobei die Steuerschaltung (19) eine Datenverarbeitungseinrichtung zum Ausführen von Softwarebefehlen umfasst.

25. Vorrichtung (10) nach Anspruch 12, wobei die Steuerschaltung (19) ausgebildet ist zum Ordnen (42) der Farben durch Identifizieren der einen der Farben, für die die Bilddaten (11) einen größten durchschnittlichen Pixelwert angeben.

26. Vorrichtung (10) nach Anspruch 12, wobei die Steuerschaltung (19) ausgebildet ist zum Ordnen (42) der Farben durch Identifizieren der einen der Farben, für die die Bilddaten (11) eine größte durchschnittliche Helligkeit angeben.

27. Vorrichtung (10) nach Anspruch 12, wobei die Steuerschaltung (19) ausgebildet ist zum Ordnen (42) der Farben durch Identifizieren der einen der Farben, für die die Bilddaten (11) einen größten individuellen Pixelwert angeben.

28. Vorrichtung (10) nach Anspruch 12, wobei die Steuerschaltung (19) ausgebildet ist zum Ordnen (42) der Farben durch Identifizieren der einen der Farben, für die die Bilddaten (11) eine größte individuelle Pixelhelligkeit angeben.

29. Vorrichtung (10) nach Anspruch 12, wobei die Steuerschaltung (19) ausgebildet ist zum Ordnen (42) der Farben durch Identifizieren der einen der Farben, für die die Bilddaten (11) eine größte Pixelwertvariation angeben.

30. Vorrichtung (10) nach Anspruch 12, wobei die Steuerschaltung (19) ausgebildet ist zum Ordnen (42) der Farben durch Identifizieren der einen der Farben, für die die Bilddaten (11) eine größte Helligkeitsvariation angeben.

31. Vorrichtung (10) nach Anspruch 12, wobei die Steuerschaltung (19) ausgebildet ist zum Ordnen (42) der Farben durch eine Kombination eines oder mehrerer der Folgenden:

    Identifizieren der einen der Farben, für die die Bilddaten (11) einen größten durchschnittlichen Pixelwert angeben;
    Identifizieren der einen der Farben, für die die Bilddaten (11) eine größte durchschnittliche Helligkeit angeben;
    Identifizieren der einen der Farben, für die die Bilddaten (11) einen größten individuellen Pixelwert angeben;
    Identifizieren der einen der Farben, für die die Bilddaten (11) eine größte individuelle Pixelhelligkeit angeben;
    Identifizieren der einen der Farben, für die die Bilddaten (11) eine größte Pixelwertvariation angeben;
    Identifizieren der einen der Farben, für die die Bilddaten (11) eine größte Helligkeitsvariation angeben;
    Identifizieren der einen der Farben, für die die Bilddaten (11) einen Höchstgrad an räumlicher Häufung angeben; oder
    eine Kombination zweier oder mehrerer hiervon.

32. Vorrichtung (10) nach Anspruch 12, wobei der Modulator (12) mehrere Teile umfasst, die jeweils mehrere Pixel (13) des Modulators (12) umfassen und wobei die Steuerschaltung (19) ausgebildet ist zum Ordnen (42) der Farben, Festlegen (44) eines ersten wirksamen Luminanzmusters, Festlegen (46) von ersten Modulatorwerten (18), Festlegen (48) eines zweiten wirksamen Luminanzmusters, Treiben (50) der ersten und zweiten Gruppe (16R, 16B, 16G) von Lichtquellen (16) und getrenntes Steuern (50) der Pixel (13) des Modulators (12) für jedes der mehreren Teile.

33. Vorrichtung (10) nach Anspruch 12, wobei die Bilddaten (11) rote, grüne und blaue Farbwerte umfassen.

34. Vorrichtung (10) nach Anspruch 12, wobei die Bilddaten (11) Videodaten umfassen, die mehrere Blöcke umfassen, und die Steuerschaltung (19) ausgebildet ist zum Wiederholen des Ordnens (42) der Farben, des Festlegens (44) eines ersten wirksamen Luminanzmusters, des Festlegens (46) von ersten Modulatorwerten (18), des Festlegens (48) eines zweiten wirksamen Luminanzmusters, des Treibens (50) der ersten und zweiten Gruppe (16R, 16B, 16G) von Lichtquellen (16) und des Steuerns (50) der Pixel (13) des Modulators (12) für jeden der Videodatenblöcke.

**Revendications**

1. Procédé (40) pour afficher des images dans une zone de visualisation (15), le procédé (40) comprenant les étapes suivantes :

la disposition d'un réseau (14) comprenant une pluralité de groupes (16R, 16B, 16G) de sources de lumière pouvant être commandées individuellement (16), les sources de lumière (16) de chaque groupe (16R, 16B, 16G) émettant une lumière d'une correspondante d'une pluralité de couleurs ;

la disposition d'un modulateur (12) ayant une zone active comprenant une pluralité de pixels (13) ; et

la disposition d'un circuit de commande (19) configuré pour générer des signaux de commande de source de lumière (17) pour actionner les sources de lumière (16) pour projeter une lumière sur la zone active d'un modulateur (12), et des signaux de commande de modulateur (18) pour commander les pixels (13) du modulateur (12) pour faire varier une proportion de lumière incidente sur la zone active qui est transférée à la zone de visualisation (15),

dans lequel le réseau (14) est utilisable pour projeter un schéma de luminance qui a une variation d'intensité sur la zone active pour chacune de la pluralité de couleurs ; et en ce que le circuit de commande (19) est configuré en outre pour :

- classer (42) la pluralité de couleurs par ordre d'importance, dans lequel une première couleur est déterminée pour être plus importante que les autres de la pluralité de couleurs ;

- établir (44) un premier schéma de luminance effective pour un premier des groupes (16R, 16B, 16G) de sources de lumière (16) dans le réseau (14) correspondant à la première couleur, le premier schéma de luminance effectif indiquant des variations d'intensité de la lumière de la première couleur (44) sur la zone active et étant tel qu'un schéma de luminance spécifié pour chaque pixel (13), pour la première couleur, par des données d'image (11) puisse être obtenu dans une plage de modulation du pixel (13) ;

**caractérisé en ce que** le procédé comprend en outre les étapes suivantes :

- la détermination (46) de premières valeurs de modulateur (18) en divisant une luminance désirée pour chaque pixel (13) telle que spécifiée dans les données d'image (11) pour la première couleur par la luminance pour ce pixel (13) fournie par le premier schéma de luminance effective ;

- l'établissement (48) d'un deuxième schéma de luminance effective pour un deuxième des groupes (16R, 16B, 16G) de sources de lumière (16) dans le réseau (14) correspondant à une deuxième couleur, le deuxième schéma de luminance effective indiquant des variations d'intensité de la lumière de la deuxième couleur (48) sur la zone active et étant obtenu en divisant les valeurs spécifiées dans les données d'image (11) pour la deuxième couleur par les premières valeurs de modulateur (18) ;

- et l'application desdits signaux de commande (17, 18) pour actionner (50) le premier groupe (16R, 16B, 16G) de sources de lumière (16) avec un premier signal d'actionnement de source de lumière (17) de manière que le premier groupe (16R, 16B, 16G) de sources de lumière (16) projette le premier schéma de luminance effective sur la zone active du modulateur (12), et pour commander (50) les pixels (13) du modulateur (12) pour permettre de manière sélective à la lumière de la première couleur et de la deuxième couleur provenant de la zone active de passer à la zone de visualisation (15) sur la base des premières valeurs de modulateur (18).

2. Procédé (40) selon la revendication 1, dans lequel le classement (42) des couleurs comprend l'identification de celle des couleurs pour laquelle les données d'image (11) spécifient une plus grande valeur de pixel moyenne.

3. Procédé (40) selon la revendication 1, dans lequel le classement (42) des couleurs comprend l'identification de celle des couleurs pour laquelle les données d'image (11) spécifient une plus grande luminosité moyenne.

4. Procédé (40) selon la revendication 1, dans lequel le classement (42) des couleurs comprend l'identification de celle des couleurs pour laquelle les données d'image (11) spécifient une plus grande valeur de pixel individuel.

5. Procédé (40) selon la revendication 1, dans lequel le classement (42) des couleurs comprend l'identification de celle des couleurs pour laquelle les données d'image (11) spécifient une plus grande luminosité de pixel individuel.

6. Procédé (40) selon la revendication 1, dans lequel le classement (42) des couleurs comprend l'identification de celle des couleurs pour laquelle les données d'image (11) spécifient une plus grande variation de valeurs de pixel.

7. Procédé (40) selon la revendication 1, dans lequel le classement (42) des couleurs comprend l'identification de celle des couleurs pour laquelle les données d'image (11) spécifient une plus grande variation de luminosité.

8. Procédé (40) selon la revendication 1, dans lequel le classement (42) des couleurs comprend une combinaison d'une ou plusieurs des étapes suivantes :

> l'identification de celle des couleurs pour laquelle les données d'image (11) spécifient une plus grande valeur de pixel moyenne ;
> l'identification de celle des couleurs pour laquelle les données d'image (11) spécifient une plus grande luminosité moyenne ;
> l'identification de celle des couleurs pour laquelle les données d'image (11) spécifient une plus grande valeur de pixel individuel ;
> l'identification de celle des couleurs pour laquelle les données d'image (11) spécifient une plus grande luminosité de pixel individuel ;
> l'identification de celle des couleurs pour laquelle les données d'image spécifient une plus grande variation de valeurs de pixel ;
> l'identification de celle des couleurs pour laquelle les données d'image (11) spécifient une plus grande variation de luminosité ;
> l'identification de celle des couleurs pour laquelle les données d'image (11) spécifient un degré maximal de regroupement spatial ; ou,
> une combinaison d'au moins deux ce celles-ci.

9. Procédé (40) selon la revendication 1 effectué séparément pour chacune d'une pluralité de parties du modulateur (12), chacune des parties comprenant une pluralité de pixels (13) du modulateur (12).

10. Procédé (40) selon la revendication 1, dans lequel les données d'image (11) comprennent des valeurs de couleur rouge, verte et bleue.

11. Procédé (40) selon la revendication 1, dans lequel les données d'image (11) comprennent des données vidéo comprenant une pluralité de trames et le procédé (40) est répété pour chacune des trames des données vidéo.

12. Appareil pour afficher des images dans une zone de visualisation (15), l'appareil (10) comprenant :

> un réseau (14) comprenant une pluralité de groupes (16R, 16B, 16G) de sources de lumière pouvant être commandées individuellement (16), les sources de lumière (16) de chaque groupe (16R, 16B, 16G) émettant une lumière d'une correspondante d'une pluralité de couleurs ;
> un modulateur (12) ayant une zone active comprenant une pluralité de pixels (13), la zone active étant illuminée par le réseau (14), chaque pixel (13) pouvant être commandé pour faire varier une proportion de lumière incidente sur la zone active qui est transférée à la zone de visualisation (15) ;
> et,
> un circuit de commande (19) configuré pour générer des signaux de commande de source de lumière (17) pour actionner les sources de lumière (16) et des signaux de commande de modulateur (18) pour commander les pixels (13) du modulateur (12),

dans lequel le réseau (14) est utilisable pour projeter un schéma de luminance qui a une variation d'intensité sur la zone active pour chacune de la pluralité de couleurs ; et
le circuit de commande (19) est configuré pour :

> - classer (42) la pluralité de couleurs par ordre d'importance, dans lequel une première couleur est déterminée pour être plus importante que les autres de la pluralité de couleurs ;

établir (44) un premier schéma de luminance effective pour un premier des groupes (16R, 16B, 16G) de sources de lumière (16) dans le réseau (14) correspondant à la première couleur, le premier schéma de luminance effectif indiquant des variations d'intensité de la lumière de la première couleur (44) sur la zone active et étant tel qu'une luminance spécifiée pour chaque pixel (13), pour la première couleur, par des données d'image (11) puisse être obtenue dans la plage de modulation du pixel (13) ;
déterminer (46) des premières valeurs de modulateur (18) en divisant une luminance désirée pour chaque pixel (13) telle que spécifiée dans les données d'image (11) pour la première couleur par la luminance pour ce pixel (13) fournie par le premier schéma de luminance effective ; **caractérisé en ce que** le circuit de commande est configuré en outre pour :

établir (48) un deuxième schéma de luminance effective pour un deuxième des groupes (16R, 16B, 16G) de sources de lumière (16) dans le réseau (14) correspondant à une deuxième couleur, le deuxième schéma de luminance effective indiquant des variations d'intensité de la lumière de la deuxième couleur (48) sur la zone active et étant obtenu en divisant les valeurs spécifiées dans les données d'image (11) pour la deuxième couleur par les premières valeurs de modulateur (18) ;

appliquer lesdits signaux de commande (17, 18) pour actionner (50) le premier groupe (16R, 16B, 16G) de sources de lumière (16) avec un premier signal d'actionnement de source de lumière (17) de manière que le premier groupe (16R, 16B, 16G) de sources de lumière (16) projette le premier schéma de luminance effective sur la zone active du modulateur (12), et pour commander (50) les pixels (13) du modulateur (12) pour permettre de manière à la lumière de la première couleur et de la deuxième couleur provenant de la zone active de passer à la zone de visualisation (15) sur la base des premières valeurs de modulateur (18).

13. Appareil (10) selon la revendication 12, dans lequel le modulateur (12) est un modulateur transmissif (12).

14. Appareil (10) selon la revendication 13, dans lequel le modulateur (12) comprend un panneau LCD.

15. Appareil (10) selon la revendication 14, dans lequel le panneau LCD est un panneau LCD à échelle des gris.

16. Appareil (10) selon la revendication 12, dans lequel le modulateur (12) est un modulateur réflectif (12).

17. Appareil (10) selon la revendication 12 comprenant au moins trois groupes (16R, 16B, 16G) de sources de lumière (16).

18. Appareil (10) selon la revendication 17, dans lequel les trois groupes (16R, 16B, 16G) de sources de lumière (16) comprennent un groupe rouge (16R) de sources de lumière (16) qui émettent une lumière rouge, un groupe vert (16G) de sources de lumière (16) qui émettent une lumière verte et un groupe bleu (16B) de sources de lumière (16) qui émettent une lumière bleue.

19. Appareil (10) selon la revendication 12, dans lequel les sources de lumière (16) comprennent des diodes électroluminescentes.

20. Appareil (10) selon la revendication 12, dans lequel au moins deux des groupes (16R, 16B, 16G) de sources de lumière (16) sont constitués de nombres différents de sources de lumière (16).

21. Appareil (10) selon la revendication 20, dans lequel les sources de lumière (16) de chacun des groupes (16R, 16B, 16G) de sources de lumière (16) sont distribuées uniformément par rapport au modulateur (12).

22. Appareil (10) selon la revendication 12, dans lequel des fonctions d'étalement du point de celles adjacentes parmi les sources de lumière (16) de chacun des groupes (16R, 16B, 16G) se chevauchent entre elles.

23. Appareil (10) selon la revendication 22, dans lequel un rapport entre un espacement moyen entre celles adjacentes parmi les sources de lumière (16) dans l'un quelconque des groupes (16R, 16B, 16G) de sources de lumière (16) et une largeur d'une fonction d'étalement du point des sources de lumière (16) dans le groupe (16R, 16B, 16G) de sources de lumière (16) est le même dans un intervalle de $\pm 20\%$ pour tous les groupes (16R, 16B, 16G) de sources de lumière (16) dans le réseau (14).

24. Appareil (10) selon la revendication 12, dans lequel le circuit de commande (19) comprend un processeur de données exécutant des instructions logicielles.

25. Appareil (10) selon la revendication 12, dans lequel le circuit de commande (19) est configuré pour classer (42) les couleurs en identifiant celle des couleurs pour laquelle les données d'image (11) spécifient une plus grande valeur de pixel moyenne.

26. Appareil (10) selon la revendication 12, dans lequel le circuit de commande (19) est configuré pour classer (42) les couleurs en identifiant celle des couleurs pour laquelle les données d'image (11) spécifient une plus grande luminosité moyenne.

27. Appareil (10) selon la revendication 12, dans lequel le circuit de commande (19) est configuré pour classer (42) les couleurs en identifiant celle des couleurs pour laquelle les données d'image (11) spécifient une plus grande valeur de pixel individuel.

28. Appareil (10) selon la revendication 12, dans lequel le circuit de commande (19) est configuré pour classer (42) les couleurs en identifiant celle des couleurs pour laquelle les données d'image (11) spécifient une plus grande luminosité de pixel individuel.

29. Appareil (10) selon la revendication 12, dans lequel le circuit de commande (19) est configuré pour classer (42) les couleurs en identifiant celle des couleurs pour laquelle les données d'image (11) spécifient une plus grande variation de valeurs de pixel.

30. Appareil (10) selon la revendication 12, dans lequel le circuit de commande (19) est configuré pour classer (42) les couleurs en identifiant celle des couleurs pour laquelle les données d'image (11) spécifient une plus grande variation de luminosité.

31. Appareil (10) selon la revendication 12, dans lequel le circuit de commande (19) est configuré pour classer (42) les couleurs par une combinaison d'une ou plusieurs parmi :

l'identification de celle des couleurs pour laquelle les données d'image (11) spécifient une plus grande valeur de pixel moyenne ;
l'identification de celle des couleurs pour laquelle les données d'image (11) spécifient une plus grande luminosité moyenne ;
l'identification de celle des couleurs pour laquelle les données d'image (11) spécifient une plus grande valeur de pixel individuel ;
l'identification de celle des couleurs pour laquelle les données d'image (11) spécifient une plus grande luminosité de pixel individuel ;
l'identification de celle des couleurs pour laquelle les données d'image (11) spécifient une plus grande variation de valeurs de pixel ;
l'identification de celle des couleurs pour laquelle les données d'image (11) spécifient une plus grande variation de luminosité ;
l'identification de celle des couleurs pour laquelle les données d'image (11) spécifient un degré maximal de regroupement spatial ; ou,
une combinaison d'au moins deux ce celles-ci.

32. Appareil (10) selon la revendication 12, dans lequel le modulateur (12) comprend une pluralité de parties, chacune des parties comprenant une pluralité de pixels (13) du modulateur (12), et, dans lequel le circuit de commande (19) est configuré pour classer (42) les couleurs, établir (44) un premier schéma de luminance effective, déterminer (46) des premières valeurs de modulateur (18), établir (48) un deuxième schéma de luminance effective, actionner (50) les premier et deuxième groupes (16R, 16B, 16G) de sources de lumière (16), et commander (50) les pixels (13) du modulateur (12) séparément pour chacune de la pluralité de parties.

33. Appareil (10) selon la revendication 12, dans lequel les données d'image (11) comprennent des valeurs de couleur rouge, verte et bleue.

34. Appareil (10) selon la revendication 12, dans lequel les données d'image (11) comprennent des données vidéo comprenant une pluralité de trames et le circuit de commande (19) est configuré pour répéter le classement (42) des couleurs, l'établissement (44) d'un premier schéma de luminance effective, la détermination (46) de premières valeurs de modulateur (18), l'établissement (48) d'un deuxième schéma de luminance effective, la commande (50) des premier et deuxième groupes (16R, 16B, 16G) de sources de lumière (16), et la commande (50) the pixels (13) du modulateur (12) pour chacune des trames des données vidéo.

**FIGURE 1**

30

APPLY COLOR 1 MODULATION SIGNAL AND COLOR 1 LIGHT SOURCE DRIVING SIGNAL — 32A

APPLY COLOR 2 MODULATION SIGNAL AND COLOR 2 LIGHT SOURCE DRIVING SIGNAL — 32B

• • •

APPLY COLOR N MODULATION SIGNAL AND COLOR N LIGHT SOURCE DRIVING SIGNAL — 32C

# FIGURE 1A

R G B R G B R G B R
G B R G B R G B R G
R G B R G B R G B R
G B R G B R G B R G
R G B R G B R G B R

17B
17R
RED CONTROL SIGNALS

16R
16B
16G
14

GREEN CONTROL SIGNALS

17G

BLUE CONTROL SIGNALS

## FIGURE 2

20

IMAGE DATA — 11

21-1

DETERMINE COLOR 1 LIGHT SOURCE VALUES

21-2

DETERMINE COLOR 2 LIGHT SOURCE VALUES

21-3

DETERMINE COLOR 3 LIGHT SOURCE VALUES

22-1

DETERMINE COLOR 1 ELP

22-2

DETERMINE COLOR 2 ELP

22-3

DETERMINE COLOR 3 ELP

DETERMINE COLOR 1 MODULATOR VALUES

23-1

DETERMINE COLOR 2 MODULATOR VALUES

23-2

DETERMINE COLOR 3 MODULATOR VALUES

23-3

COLOR 1 MODULATOR CONTROL SIGNAL

18-1

COLOR 2 MODULATOR CONTROL SIGNAL

18-2

18-3

COLOR 3 MODULATOR CONTROL SIGNAL

COLOR 1 LIGHT SOURCE CONTROL SIGNAL

17-1

COLOR 2 LIGHT SOURCE CONTROL SIGNAL

17-2

17-3

COLOR 3 LIGHT SOURCE CONTROL SIGNAL

# FIGURE 1B

START

IDENTIFY MOST IMPORTANT COLOR — 42

DETERMINE ELP FOR MOST IMPORTANT COLOR — 44

DETERMINE MODULATOR VALUES FOR MOST IMPORTANT COLOR — 46

DETERMINE ELP FOR THE OTHER COLORS — 48

APPLY MODULATOR AND LIGHT SOURCE DRIVING SIGNALS — 50

CORRECT IMAGE VALUES FOR NEXT MOST IMPORTANT COLOR — 52

DETERMINE MODULATOR VALUES FOR NEXT MOST IMPORTANT COLOR — 54

APPLY MODULATOR AND LIGHT SOURCE DRIVING SIGNALS — 56

MORE COLORS? — YES / NO

40

58

59

**FIGURE 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03077013 A3
- US 2004246275 A1
- US 2002060662 A1
- US 2004201561 A1
- WO 940629 A